## Europäisches Patentamt

## European Patent Office

## Office européen des brevets

(19)

(11) Veröffentlichungsnummer: **0 129 225**
**B1**

(12) # EUROPÄISCHE PATENTSCHRIFT

(45) Veröffentlichungstag der Patentschrift:
04.11.87

(51) Int. Cl.⁴: **G 11 B 7/24**

(21) Anmeldenummer: **84106871.1**

(22) Anmeldetag: **15.06.84**

(54) **Plattenförmiger, optisch auslesbarer Informationsträger mit Schutzrand.**

(30) Priorität: **20.06.83 DE 3322131**

(43) Veröffentlichungstag der Anmeldung:
**27.12.84 Patentblatt 84/52**

(45) Bekanntmachung des Hinweises auf die Patenterteilung:
**04.11.87 Patentblatt 87/45**

(84) Benannte Vertragsstaaten:
**AT BE CH DE FR GB IT LI LU NL SE**

(56) Entgegenhaltungen:
**DE-A-2 839 395**
**DE-B-2 624 375**
**DE-B-2 624 380**
**DE-B-2 643 464**

(73) Patentinhaber: **POLYGRAM GmbH,**
**Glockengiesserwall 3, D-2000 Hamburg 1 (DE)**

(72) Erfinder: **Tiefensee, Volkmar, Dipl.- Ing.,**
**Sedanstrasse 72, D-3000 Hannover 1 (DE)**

(74) Vertreter: **Meier, Friedrich, Dipl.- Ing., Philips**
**Patentverwaltung GmbH Wendenstrasse 35**
**Postfach 10 51 49, D-2000 Hamburg 1 (DE)**

## Beschreibung

Die Erfindung bezieht sich auf einen plattenförmigen, optisch von einer oder von beiden Seiten in Reflexion oder in Durchlicht auslesbaren Informationsträger hoher Speicherdichte, bei den die eine Mikrostruktur aufweisende Information in einer konzentrischen Ringfläche der informationsträgerplatte angeordnet ist und der die Merkmale aus dem Oberbegriff des Anspruchs 1 aufweist.

Optisch auslesbare Informationsträgerplatten sind beispielsweise durch die DE-OS-28 39 359 bekannt. Die die Information darstellende Mikrostruktur ist hierbei auf einer Plattenseite in die Plattenoberfläche eingeprägt, mit einer reflektierenden Metallschicht versehen und mit einer Schutzschicht abgedeckt. Ausgelesen wird die Platte nicht auf seiten der Schutzschicht, sondern von der gegenüberliegenden Seite, was in diesem Falle einen transparanten Werkstoff des Trägermaterials voraussetzt. Der Laserstrahl ist in der Ebene der Informationsstruktur fokussiert, so daß Staubpartikel und Verunreinigungen an der Oberfläche der Ausleseseite der Informationsträgerplatte weit weniger störend wirken, als dies der Fall wäre, wenn das Auslesen der Information auf Seiten der die Informationsstruktur abdeckenden Schutzschicht erfolgen würde.

Wie die genannte Literaturstelle weiterhin zeigt, ist es bei Vereinigung zweier Trägerplatten auf seiten der sie tragenden Informationsstruktur zu einer Sandwich-Platte möglich, einem solchen Informationsträger von beiden Seiten in Reflexion auszulesen. Neben solchen in Reflexion optisch auslesbaren plattenförmigen Informationsträgern sind auch Ausführungen bekannt, bei denen das Auslesen in Durchlicht erfolgt.

Wie die Praxis zeigt, ist es für das einwandfreie Auslesen solcher Platten nicht nur erforderlich, die Plattenoberfläche auf der Ausleseseite von Staub und sonstigen Verunreinigungen möglichst frei zu halten, sondern auch wichtig, daß die Platten bei der Handhabung auf der Ausleseseite kratzerfrei bleiben. Gerade Kratzer haben nämlich zur Folge, daß das Licht des Laserstrahls im Bereich eines Kratzers diffus reflektiert wird und damit mangels einwandfreier Fokussierung des Laserstrahls in der Ebene der Informationsstruktur der Auslesevorgang erheblich gestört werden kann. Darüber hinaus können solche Kratzer nachträglich nicht mehr von der Platte entfernt werden.

Durch die japanische Offenlegungsschrift 58-48069 ist es bereits bekannt, einseitig optisch auslesbare plattenförmige Informationsträger auf der Ausleseseite mit einem erhöhten Schutzrand auszustatten, so daß die Platte beim Ablegen auf eine Unterlage nur mit ihrem Schutzrand auf der Unterlage gleiten kann.

Aus der DE-A-26 24 375 ist eine optisch auslesbare Platte bekannt, die am inneren und äußeren Rand eine aus einem anderen Material als der Informationsträger bestehende ringflächenförmige Erhöhung aufweist. Diese Erhöhung dient zur Stabilisierung der sehr dünnen Informationsträgerplatte.

Der Erfindung liegt die Aufgabe zugrunde, einen plattenförmigen, optisch auslesbaren Informationsträger hoher Speicherdichte hinsichtlich seines Schutzes gegen unbeabsichtigte Kratzer, insbesondere auf der Ausleseseite, weiter zu verbessern.

Dieser Aufgabe wird durch die im Kennzeichen des Patentanspruchs 1 angegebenen Merkmale gelöst.

Der Erfindung liegt die wesentliche Erkenntnis zugrunde, daß auch beim Umgang mit einen Schutzrand aufweisenden Platten leicht Kratzer auf der Plattenoberfläche entstehen, wenn die Platte auf ihrer Unterlage unbeabsichtigt hin- oder hergeschoben wird, weil die Unterlage vielfach nicht in sich eben ist und der Schutzrand aus den verschiedensten Gründen in seiner Höhe kleiner als die Plattenstärke zu bemessen ist. Durch die erfindungsgemäße zusätzliche Erhöhung im Zentralbereich der Platte wird in außerordentlich vorteilhafter Weise erreicht, daß auch Unebenheiten der Unterlage beim Verschieben einer hiermit abgelesenen Platte als Kratzerverursacher so gut wie nicht mehr in Frage kommen können. Besondere Bedeutung kommt der zusätzlichen Erhöhung im zentralen Bereich der Platte dann zu, wenn die Informationsträgerplatten einen relativ großen Durchmesser, wie das beispielsweise bei einer Videoplatte der Fall ist, aufweisen. Nicht nur, daß sich hier Unebenheiten der Ablagenoberfläche stärker auswirken können als bei Platten mit kleinem Durchmesser, beispielsweise eine digitale Audioplatte, sondern daß hier auch die auf einem Schutzrand aufliegende Platte im Mittenbereich dazu neigt, durchzuhängen.

Abgesehen davon, kann die eine Verstärkung des Mittenbereichs der Platte darstellende Erhöhung auch aus Stabilitätsgründen zweckmäßig sein.

Weitere vorteilhafte Ausgestaltungen des Erfindungsgegenstandes sind in den Patentansprüchen 2 bis 4 angegeben.

Plattenförmige, optisch auslesbare Informationsträger hoher Speicherdichte lassen sich im Spritz-Preß-Verfahren herstellen. Dies gilt insbesondere für die beispielsweise durch die DE 3127 993 A1 bekannte digitale Schallplatte, die mit einen Durchmesser von 12 cm gefertigt wird. In Weiterbildung der Erfindung wird für ein Verfahren zur Herstellung von Preßmatrizen für die Fertigung von plattenförmigen, optisch auslesbaren Informationsträgern nach der Erfindung im Spritz-Preß-Verfahren vorgeschlagen, die zu erhöhenden Plattenbereiche bei der Erstellung der Masterplatte bereits auf der Masterplatte vorzusehen, von der dann auf galvanotechnischen Wege ein Vatergalvano und vom Vatergalvano über ein Muttergalvano hinweg die Preßmatrizen in üblicher Weise ebenfalls galvanotechnisch erzeugt werden.

Anhand von in der Zeichnung dargestellten Ausführungsbeispielen soll die Erfindung im folgenden noch näher erläutert werden.

In der Zeichnung bedeuten.

Fig. 1, 2 ein erstes Ausführungsbeispiel in Aufsicht und Querschnitt,

Fig. 3 ein weiteres, den Fig. 1, 2 entsprechendes Ausführungsbeispiel für ein Auslesen der Information von beiden Seiten im Schnitt,

Fig. 4, 5 eine Variante zum Ausführungsbeispiel nach Fig. 1, 2

Fig. 6 eine Fig. 4, 5 entsprechende Ausführungsform für doppelseitiges Auslesen der Information im Schnitt.

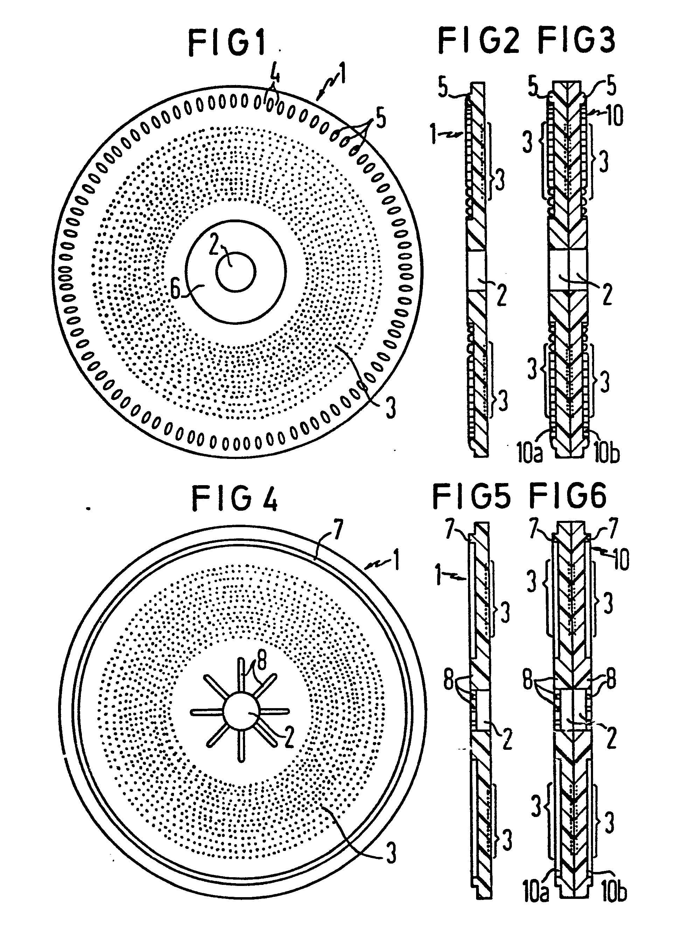

Die in Fig. 1, 2 in Draufsicht und im Schnitt dargestellte, optisch auslesbare Informationsträgerplatte 1 besteht aus einen transparenten Kunststoff und weist ein konzentrisches Mittelloch 2 auf. Die Mikrostruktur aufweisende Information 3 ist auf der der Ausleseseite gegenüberliegenden Seite der Platte auf einer konzentrischen Ringfläche, beispielsweise in Gestalt einer Spiralspur, angeordnet. Zum Kratzerschutz weist die Informationsträgerplatte 1 randseitig auf der Ausleseseite eine ringwallförmige Erhöhung auf, die aus einzelnen, in einen vorgegebenen, durch einen Zwischenraum 4 gegebenen Abstand hintereinander angeordneten Erhebungen 5 tropfenförmiger Gestalt bestehen. Diese tropfenförmige Gestalt wirkt sich bei der Herstellung solcher Informationsträgerplatten im Spritz-Preß-Verfahren im Hinblick auf einen geringen Strömungswiderstand günstig aus. Weiterhin weist die Ausführungsform Fig. 1, 2 un das Mittelloch 2 ebenfalls eine konzentrische ringförmige Erhöhung 6 auf, die in gleicher Weise wie die ringwallförmige randseitige Erhöhung die Ausleseseite im Bereich der von der Information eingenommenen konzentrischen Ringfläche vor Kratzern beim Verschieben der Platte auf einer Unterlage schützt. Die der Ausleseseite gegenüberliegende Seite der Platte, die, sofern es sich um eine digitale Schallplatte handelt, über die gesamte Fläche mit einem Etikett versehen ist, bedarf im allgemeinen solcher Erhöhungen nicht, da Kratzer auf dieser Seite den einwandfreien Auslesevorgang nicht beeinträchtigen können.

Anders sieht es aus, wenn die Informationsträgerplatte, wie das der Schnitt in Fig. 3 zeigt, eine von beiden Seiten auslesbare Sandwichplatte 10 ist. Sie besteht aus zwei Teilplatten 10a und 10b, die auf den die Informationsstruktur 3 enthaltenden Seiten zusammengefügt sind. Beide Seiten sind hier Ausleseseiten und werden entsprechend Fig. 1, 2 mit Erhöhungen im Zentral- und im Randbereich versehen.

Eine der Fig. 1, 2 entsprechende Variante zeigt Fig. 4, 5. Die ringwallförmige Erhöhung im Randbereich besteht hier aus einem gegenüber dem Rand abgesetzten schmalen konzentrischen Ringwall 7 mit abgerundetem Profil. Die konzentrische, vom Mittelloch 2 begrenzte Ringfläche 6 nach Fig. 1, 2 ist hier lediglich durch radiale, in einem vorgegebenen Kreiswinkelabstand im Umfangsrichtung aufeinanderfolgende Stege 8 mit gerundetem Profil realisiert. Die der Informationsträgerplatte 1 nach Fig. 4, 5 entsprechende Informationsträgerplatte 10 für doppelseitige Auslesung zeigt Fig. 6. Anstelle der Stege können auch tropfenförmige Erhöhungen 5 entsprechend den Fig. 1, 2 und 3 in geeigneter Anordnung vorgesehen sein.

Wie bereits erwähnt worden ist, ist es sinnvoll, bei Herstellung solcher Informationsträgerplatten 1 bzw. 10 im Spritz-Preßverfahren die gewünschten Erhöhungen im Bereich des Plattenrandes und des Plattenzentrums bereits auf der Masterplatte vorzusehen, so daß hierfür an den Preßmatrizen nicht in besonderen Fertigungsvorgängen die zu pressenden Erhöhungen speziell gestaltet werden müssen.

**Patentansprüche**

1. Plattenförmiger, optisch von einer oder von beiden Seiten in Reflexion und/oder in Durchsicht auslesbarer Informationsträger hoher Speicherdichte aus Kunststoff, der vorzugsweise in einem Spritzpreß- oder Spritzgußverfahren hergestellt ist, bei dem eine eine Mikrostruktur aufweisende Informationsaufzeichnung in einer konzentrischen Ringfläche angeordnet ist und bei dem auf der Ausleseseite in einem Bereich innerhalb und außerhalb der konzentrischen Mikrostruktur-Ringfläche eine ringförmig angeordnete Erhöhung vorgesehen ist, dadurch gekennzeichnet, daß die ringförmig angeordnete Erhöhung innerhalb und außerhalb der konzentrischen Mikrostruktur-Ringfläche einstückig mit der Informationsträgerplatte aus Kunststoff gebildet ist, daß wenigstens die äußere, ringförmig angeordnete Erhöhung durch Aussparungen unterteilt ist und aus einzelnen Erhebungen mit länglicher, tropfenähnlicher Gestaltung gebildet ist, welche mit ihrer Längsachse zum Mittelpunkt der Informationsträgerplatte weisen.

2. Plattenförmiger Informationsträger nach Anspruch 1, dadurch gekennzeichnet, daß die innerhalb der konzentrischen Mikrostruktur-Ringfläche ringförmig angeordnete Erhöhung durch radiale, in einem vorgegebenen Kreiswinkelabstand in Umfangsrichtung aufeinanderfolgende Stege mit gerundetem Profil gebildet ist.

3. Plattenförmiger Informationsträger nach Anspruch 1 bis 3, dadurch gekennzeichnet, daß die Erhöhungen in ihrer Höhe kleiner sind als die Dicke der Informationsträgerplatte.

4. Verfahren zur Herstellung von Preßmatrizen für die Fertigung von plattenförmigen Informationsträgern im Spritzpreßverfahren nach einem der vorhergehenden Ansprüche, dadurch gekennzeichnet, daß die zu erhöhenden Plattenbereiche bei der Stellung der Masterplatte bereits auf dieser vorgesehen werden, von der dann auf galvanotechnischem Wege ein Vater-Galvano und von diesem über ein Mutter-Galvano hinweg die Preßmatrizen in üblicher Weise ebenfalls galvanotechnisch erzeugt werden.

## Claims

1. A disc-shaped high-storage-density information carrier made of a synthetic material, which information carrier is optically readable in reflection and/or transmission from one side or from both sides and which is preferably manufactured in an injection-pressing or injection-moulding process, said information carrier being provided with an information recording having a microstructure in a concentric annular area and with an annular raised portion inside and outside the concentric annular microstructure-area, characterized in that the annular raised portion inside and outside the concentric annular microstructure-area is made integrally with the information-carrier disc from a synthetic material, and in that at least the outer annular raised portion is divided by recesses and comprises separate protections of elongate bead-like shape whose long axes are directed towards the centre of the information-carrier disc.

2. A disc-shaped information carrier as claimed in Claim 1, characterized in that the annular raised portion inside the concentric annular microstructure-area is constituted by radial ridges having a rounded profile, which ridges are circumferentially spaced from each other by a predetermined angular distance.

3. A disc-shaped information carrier as claimed in Claim 1 or 2, characterized in that the height of the raised portions is smaller than the thickness of the information carrier.

4. A method of manufacturing stampers for the production of disc-shaped information carriers as claimed in any one of the preceding Claims by means of an injection-pressing process, characterized in that the disc areas to be raised are already provided on the master during its manufacture, from which master a negative is made by electroforming, from which negative the stampers are derived in the customary manner via a positive also by electroforming.

## Revendications

1. Support d'information en forme de disque à haute densité d'enregistrement lisible optiquement de l'un ou des deux côtés en réflexion et/ou en transparence, en matière plastique, qui est de préférence fabriqué par un procédé de moulage par injection ou par transfert, dans lequel l'enregistrement de l'information présentant une microstructure est disposé en une surface annulaire concentrique et une surélévation annulaire est prévue sur le côté de lecture dans une zone intérieure et extérieure à la surface annulaire à microstructure concentrique, caractérise en ce que la surélévation annulaire intérieure et extérieure à la surface annulaire à microstructure concentrique est d'une pièce avec le disque de support d'information en matière plastique, qu'au moins la surélévation annulaire extérieure est subdivisée par des évidements et est formée de surélévations individuelles en forme de gouttes oblongues, qui sont orientées par leur axe longitudinal vers le centre du disque de support d'information.

2. Support d'information en forme de disque suivant la revendication 1, caractérisé en ce que la surélévation disposée de manière annulaire intérieurement par rapport à la surface annulaire de microstructure concentrique est formée par des nervures à profil arrondi qui se succèdent dans le sens circonférentiel et présentent un espacement angulaire prédéfini.

3. Support d'information en forme de disque suivant la revendication 1 ou 2, caractérisé en ce que les surélévations ont une hauteur qui est inférieure à l'épaisseur du disque de support d'information.

4. Procédé pour fabriquer des matrices de pressage pour la fabrication de supports d'information en forme de disques dans un procédé de moulage par injection suivant l'une quelconque des revendications précédentes, caractérisé en ce que les zones du disque à surélever sont prévues déjà lors de la création du disque original à partir duquel, par galvanoplastie, on prépare un père galvano et à partir de celui-ci, en passant par une mère galvano, on prépare les matrices de pressage de la manière habituelle également par galvanoplastie.

0 129 225

# FIG1    FIG2 FIG3

# FIG 4    FIG5 FIG6